# EUROPÄISCHE PATENTSCHRIFT

(11) **EP 2 536 666 B1**
(45) Veröffentlichungstag und Bekanntmachung des Hinweises auf die Patenterteilung: **12.08.2020**
(21) Anmeldenummer: 11703884.4
(22) Anmeldetag: 16.02.2011
(51) Int. Cl.: C02F 3/12, B63J 4/00

(54) **VORRICHTUNG ZUR REINIGUNG VON ABWASSER MIT EINEM BIOREAKTOR UND PARALLEL GESCHALTETEN FILTERMODULEN**
DEVICE FOR CLEANING WASTE WATER CONTAINING A BIOREACTOR AND FILTER MODULES ARRANGED IN PARALLEL
DISPOSITIF D'ÉPURATION DES EAUX USÉES CONTENANT UN BIORÉACTEUR ET DES MODULES DE FILTRE BRANCHÉS EN PARALLÈLE

(30) Priorität: 19.02.2010 DE 202010002566 U
(43) Veröffentlichungstag der Anmeldung: 26.12.2012
(73) Patentinhaber: Enveko GmbH, 28844 Weyhe (DE)
(72) Erfinder: VAN ZÜREN, Jens, 28844 Weyhe (DE)
(74) Vertreter: Eisenführ Speiser
(86) Internationale Anmeldenummer: PCT/EP2011/052265
(87) Internationale Veröffentlichungsnummer: WO 2011/101365

(56) Entgegenhaltungen:
- EP-A1- 2 147 714
- WO-A1-2008/139618
- FR-A1- 2 781 168
- JP-A- 6 106 167
- US-A1- 2006 169 636
- US-B1- 7 396 453

## Beschreibung

Die Erfindung betrifft eine Vorrichtung zur Reinigung von Verunreinigungen enthaltendem Abwasser mit mindestens einem Reaktor zur Vermischung und Anreicherung des Abwassers mit Gas für einen biologischen Abbau der Verunreinigungen und mindestens einer an den Reaktor angeschlossenen Trenneinheit zur Zurückhaltung von im Abwasser eventuell noch vorhandener Verunreinigungen, wobei die Trenneinheit eine Mehrzahl von parallel geschalteten Modulen, von denen jedes Modul eine Filteranordnung enthält, durch die das Abwasser hindurchgeleitet wird, einen stromaufwärts gelegenen Verteiler und einen stromabwärts gelegenen Sammler und jedes Modul einen Einlass und einen Auslass aufweist.

Aus der US 2006/0169636 A1 ist beispielsweise eine derartige Vorrichtung bekannt, bei der Feststoffe einer Hochgeschwindigkeitsklärstufe zugeführt und Klärabwässer, ein Abfallschlammstrom und ein Rücklaufschlammstrom gebildet werden, wobei die Klärabwässer einer Membranstufe zugeführt werden, wodurch ein Membranausschussstrom und ein behandelter Abflussstrom entstehen.

Unter "Abwasser" wird im vorliegenden Kontext insbesondere zum einen flüssige Abfallprodukte aus dem Küchen- und Sanitärbereich und zum anderen flüssige Abfallprodukte aus industriellen Prozessen verstanden. Gewöhnlich enthält Abwasser nicht nur Wasser, sondern auch andere flüssige sowie feste Bestandteile, bei denen es sich auch nicht selten um Biomasse handelt. Bei Abwasser aus dem Sanitärbereich unterscheidet man ferner zwischen Grauwasser, bei welchem es sich um mit Chemikalien, insbesondere Spülmitteln und Tensiden, versetztes und leicht verunreinigtes Wasser aus Spülbecken, Dusche und Badewanne handelt, und Schwarzwasser, das zusätzlich noch Dickstoffe, gewöhnlich biologischen Ursprunges, enthält und bei der Benutzung von Toiletten entsteht.

Die Vorrichtung der eingangs genannten Art erlaubt eine zweistufige Reinigung von Abwasser. Zunächst erfolgt eine biologische Reinigung des Abwassers in einem Reaktor durch Vermischen des Abwassers mit Gas, bei dem es sich gewöhnlich um Luft oder Sauerstoff handelt, und anschließendem biologischem Abbau der im Abwasser enthaltenen Verunreinigungen. Wahlweise können ein Reaktor oder bei Bedarf auch mehrere Reaktoren verwendet werden. Im Falle einer Verwendung von mehreren Reaktoren können diese parallel und/oder in Reihe geschaltet sein, wobei eine Parallelschaltung zu einer Kapazitätssteigerung führt, während mit einer Reihenschaltung, beispielsweise aus einem primären Reaktor und einem nachgeschalteten sekundären Reaktor, hauptsächlich eine Steigerung der Reinigungsqualität bezweckt wird. In einer dem Reaktor nachgeordneten Trenneinheit findet ein weiterer Reinigungsprozess statt, indem durch die Trenneinheit im Abwasser evtl. noch vorhandene restliche Verunreinigungen, insbesondere Biomasse und/oder sonstige Dickstoffe, zurückgehalten und somit dem Abwasser entzogen werden. Während also im Reaktor im Wesentlichen eine biologische Reinigung stattfindet, erfolgt die Reinigung in der dem Reaktor nachgeordneten Trenneinheit im Wesentlichen auf mechanischem Wege. Dieses zweistufige Verfahren, welches kontinuierlich abläuft, führt zu einem sehr hohen Reinheitsgrad des gereinigten Abwassers.

Bei vielen Anwendungen wird das Abwasser zunächst in mindestens einem Abwassertank gesammelt, bevor es dann den Reinigungsprozess in der zuvor beschriebenen Vorrichtung durchläuft. Spätestens wenn der Abwassertank voll ist, wird das dort zwischengespeicherte Abwasser dem Abwassertank entnommen und in die zuvor beschriebene Vorrichtung zwecks Reinigung gegeben. Somit wird die in der Reinigungsvorrichtung zu verarbeitende maximale Menge von Abwasser durch das maximale Füllvolumen des oder der Abwassertanks bestimmt. Dies führt zu einem wiederholt zeitweise unterbrochenen Betrieb der Reinigungsvorrichtung in zeitlichen Intervallen, was unter dem Gesichtspunkt der Energieeffizienz und des Wirkungsgrades von Vorteil ist und dies sich insbesondere dann besonders vorteilhaft bemerkbar macht, wenn Abwasser nur unregelmäßig und in teilweise großen zeitlichen Abständen sowie in insbesondere stark unterschiedlichen und/oder teilweise sogar sehr geringen Mengen anfällt.

Neben dem Reaktor bildet die Trenneinheit eine wichtige Komponente der Vorrichtung. Für einen effizienten Betrieb ist es sinnvoll und gewünscht, die Trenneinheit bezüglich ihrer Kapazität an die Kapazität des Reaktors und gegebenenfalls auch weiterer Komponenten der Vorrichtung und bestenfalls auch an unterschiedliche Betriebszustände der Vorrichtung entsprechend anzupassen. Der Umstand, dass durch die Trenneinheit eventuell noch vorhandene restliche Verunreinigungen wie insbesondere Biomasse und/oder sonstige Dickstoffe zurückgehalten und ausgesondert werden, bedingt von Zeit zu Zeit eine Reinigung der Trenneinheit. Durch die Reinigung wird aber zwangsläufig der Betrieb der Trenneinheit unterbrochen, was sich in der Regel auch auf den Betrieb der gesamten Vorrichtung entsprechend nachteilig auswirkt. Ähnliches gilt auch für Wartungsarbeiten an der Trenneinrichtung.

Deshalb schlägt die vorliegende Erfindung vor, dass bei einer Vorrichtung der eingangs genannten Art der Verteiler und der Sammler mit einer Mehrzahl von verschließbaren Anschlüssen versehen ist und jedes Modul mit seinem Einlass an einen Anschluss des Verteilers und mit seinem Auslass an einen Anschluss des Sammlers lösbar neu angeschlossen ist und einlassseitig eine mit der Filteranordnung in Reihe geschaltete Pumpe enthält.

Mithilfe der Erfindung ist es nun möglich, die Trenneinheit hinsichtlich ihrer betriebsrelevanten Eigenschaften und insbesondere ihrer Kapazität an den jeweiligen Betriebszustand der Vorrichtung und insbesondere an die Kapazität des verwendeten Reaktors entsprechend anzupassen, wodurch ein besonders effizienter Betrieb realisiert werden kann. Dies lässt sich erfindungsgemäß durch die Verwendung einer bestimmten und in Abhängigkeit vom gewünschten Betriebszustand festzulegenden Anzahl von parallel zu schaltenden Modulen erreichen.

Die dabei erfindungsgemäß resultierende Aufteilung der Pumpwirkung auf die einzelnen Module erhöht die Effizienz der Trenneinrichtung, da zum einen durch die direkte Zuordnung einer Pumpe zu einer Filteranordnung in einem Modul die Pumpverluste minimiert werden und zum anderen die Energiebilanz der Vorrichtung erhöht wird, da nur die Pumpen der verwendeten Module mit Energie versorgt werden müssen.

Bevorzugt ist die Trenneinheit so ausgebildet, dass die Module in der benötigten Anzahl zuschaltbar sind, was eine besonders flexible Verwendung der Trenneinheit erlaubt. Außerdem können an den abgeschalteten Modulen bei Bedarf Reinigungs- oder Wartungsarbeiten durchgeführt werden, ohne dass dadurch der Betrieb der Vorrichtung beeinträchtigt wird.

Die Erfindung ermöglicht somit eine besonders differenzierte und flexible Verwendung der Trenneinheit.

Zweckmäßigerweise kann die Trenneinheit auch so ausgebildet sein, dass die Module bei Bedarf austauschbar sind. Um den Betrieb der Trenneinheit und somit auch der gesamten Vorrichtung nicht zu beeinträchtigen, sollte während des Austausches eines oder mehrerer Module mindestens ein Modul betriebsbereit bleiben.

Da durch die Filteranordnung die im Abwasser eventuell noch vorhandenen restlichen Verunreinigungen auf mechanische Weise zurückgehalten werden, kann bevorzugt mindestens eine Membran verwendet werden, durch die das Abwasser hindurchgeleitet wird.

Nachfolgend wird ein bevorzugtes Ausführungsbeispiel der Erfindung anhand der beiliegenden Figuren näher erläutert. Es zeigen:
- Fig. 1: schematisch im Blockschaltbild eine Vorrichtung zur Reinigung von Verunreinigungen enthaltendem Abwasser; und
- Fig. 2: schematisch im Blockschaltbild eine vergrößerte Darstellung einer Trenneinheit gemäß einer bevorzugten Ausführung der Erfindung.

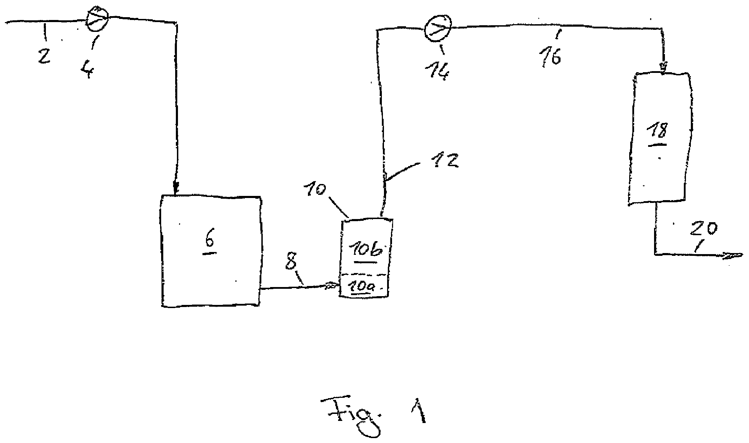

In der schematischen Darstellung einer bevorzugten Ausführung einer Reinigungsanlage gemäß Figur 1 ist eine Zuführleitung 2 zu erkennen, welche eine Pumpe 4 enthält, um Abwasser, das Verunreinigungen, gewöhnlich Dickstoffe biologischen Ursprunges, enthält, in einen Abwassertank 6 zu fördern. Alternativ oder zusätzlich ist es aber auch denkbar, die Schwerkraft zur Einleitung des Abwassers in den Abwassertank 6 zu nutzen. Der Abwassertank 6, welcher beispielsweise auf Schiffen als Fäkalientank vorgesehen sein kann, dient zur Zwischenspeicherung des Abwassers. Das Volumen eines solchen Abwassertanks 6 beträgt gewöhnlich einige Kubikmeter bzw. einige Tausend Liter.

Über einen Zulauf 8 kommuniziert der Abwassertank 6 mit einem Reaktor 10, der somit über den Zulauf 8 mit dem Verunreinigungen enthaltenden Abwasser aus dem Abwassertank 6 versorgt wird. Alternativ oder zusätzlich zu der zuvor beschriebenen Pumpe 4 kann im Zulauf 8 eine Pumpe installiert sein, welche in Figur 1 nicht dargestellt ist. Im dargestellten Ausführungsbeispiel besteht der Reaktor 10 aus einem im Wesentlichen aufrechten zylindrischen Behälter und ist unterteilt in eine untere Transportzone 10a (kurze Verweilzeit) und eine obere Reaktionszone 10b (längere Verweilzeit). Diese beiden Zonen 10a, 10b sind getrennt durch eine nicht dargestellte Schleuse oder Querschnittsverengung. Der Zulauf 8 ist an die untere Transportzone 10a angeschlossen. Mithilfe einer nicht dargestellten Begasungseinrichtung wird Gas, gewöhnlich Luft oder Sauerstoff, in die Transportzone 10a und somit in das dort befindliche Abwasser eingebracht. Zur innigen Vermischung mit dem Gas und zum Lösen desselben wird innerhalb der Transportzone 10a das Abwasser in einer umlaufenden Strömung bewegt. Durch die zuvor erwähnte Schleuse oder Querschnittsverengung findet eine Flüssigkeitsströmung von der unteren Transportzone 10a in die obere Reaktionszone 10b statt. In der Reaktionszone 10b wird das Abwasser ebenfalls einer Kreisströmung unterworfen. Die Reaktionszone 10b dient zum biologischen Abbau der Verunreinigungen im Abwasser. Hierzu enthält der Reaktor 10 in üblicher Weise Biomasse, die mit dem Abbau der Verunreinigungen wächst und in bekannter Weise nach und nach entnommen wird. Die Reaktionszone 10b und die Transportzone 10a können des Weiteren über einen in der Figur nicht dargestellten Rücklauf miteinander verbunden sein, um eine Rückführung zumindest eines Teils der Flüssigkeit aus der Reaktionszone 10b in die Transportzone 10a mit nachfolgender Neuanreicherung mit Gas zu bewirken. Zu weiteren Einzelheiten der Konstruktion des Reaktors 10 wird beispielsweise auf die DE 1 98 42 332 A1 verwiesen.

Das im Reaktor 10 insoweit gereinigte Abwasser tritt über einen an die Reaktionszone 10b angeschlossenen Ablauf 12 aus dem Reaktor 10 aus und wird mithilfe einer Pumpe 14 durch eine Verbindungsleitung 16 in eine Trenneinheit 18 gefördert. In der Trenneinheit 18 findet ein weiterer Reinigungsprozess statt, indem im Abwasser eventuell noch vorhandene restliche Verunreinigungen mechanisch zurückgehalten werden. Das auf diese Weise insgesamt zweistufig gereinigte Abwasser wird stromabwärts der Trenneinheit 18 über einen Ablauf 20 aus der Vorrichtung ausgegeben.

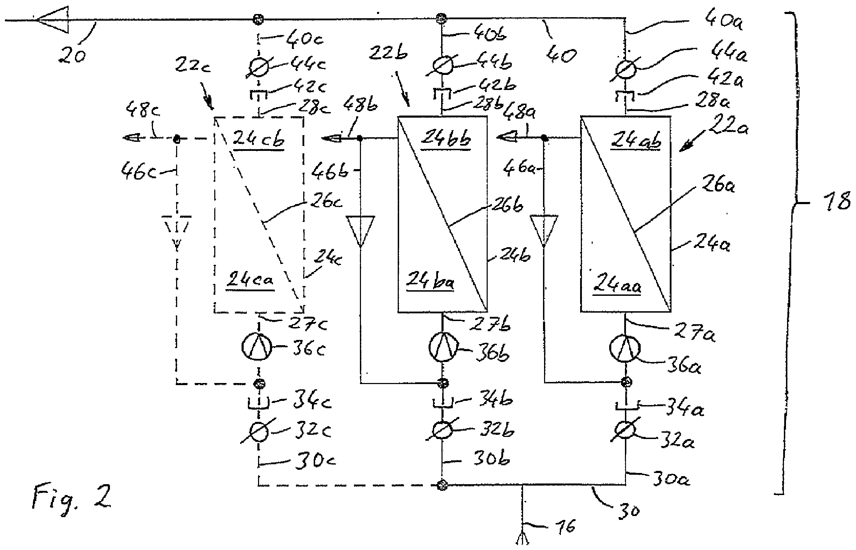

Wie die vergrößerte Darstellung der Trenneinheit in Fig. 2 im einzelnen näher erkennen lässt, weist die Trenneinheit 18 mindestens zwei parallel geschaltete Module 22a, 22b und bevorzugt mehr als zwei parallel geschaltete Module auf, was in Fig. 2 durch die gestrichelte Darstellung eines dritten Moduls 22c angedeutet ist.

Jedes Modul 22a, 22b bzw. 22c weist einen Behälter bzw. ein Gehäuse 24a, 24b bzw. 24c auf, dessen Innenraum durch eine Membran 26a, 26b bzw. 26c in einen stromaufwärts gelegenen Abschnitt 24aa, 24ba bzw. 24ca und einen stromaufwärts gelegenen Abschnitt 24ab, 24bb bzw. 24cb unterteilt ist. Die Membranen 26a, 26b, 26c übernehmen eine Filterfunktion, wodurch die im gereinigten Abwasser noch befindlichen restlichen Verunreinigungen zurückgehalten und im stromaufwärts gelegenen Abschnitt 24aa, 24ba bzw. 24ca der Module 22a, 22b, 22c gesammelt werden. Durchgelassen durch die Membranen 26a, 26b, 26c wird nur noch im wesentlichen die reine Flüssigkeit in den stromabwärts gelegenen Abschnitt 24ab, 24bb bzw. 24cb der Module 22a, 22b, 22c. In Figur 2 sind die Membranen 26a, 26b, 26c vereinfacht nur durch einen schräg verlaufenden geraden Strich angedeutet; tatsächlich sind die Membranen aber in der Regel mit einer solchen besonderen Form versehen, dass eine möglichst große Oberfläche gebildet wird. Wie Figur 2 ferner erkennen lässt, weist jedes Modul 22a, 22b bzw.22c einen Einlass 27a, 27b bzw. 27c, der mit dem stromabwärts gelegenen Abschnitt 24aa, 24ba bzw. 24ca des Gehäuses 24a, 24b bzw. 24c in Verbindung steht, sowie einen Auslass 28a, 28b bzw. 28c auf, der mit dem stromabwärts gelegenen Abschnitt 24ab, 24bb bzw. 24cb des Gehäuses 24a, 24b bzw. 24c in Verbindung steht.

Um die Module 22a, 22b, 22c an die Verbindungsleitung 16 anschließen zu können, mündet die Verbindungsleitung 16 in einen Verteiler 30, der den Fluss des Abwassers in mehrere Stränge 30a, 30b, 30c aufteilt. Jeder Strang 30a, 30b, 30c ist mit einem Absperrventil 32a, 32b, 32c versehen. Die Module 22a, 22b, 22c sind mit ihrem Einlass 27a, 27b bzw. 27c über einen trennbaren Anschluss 34a, 34b bzw. 34c stromabwärts vom Absperrventil 32a, 32b bzw. 32c mit dem zugehörigen Strang 30a, 30b bzw. 30c verbunden.

Jedes Modul 22a, 22b bzw. 22c weist ferner eine Pumpe 36a, 36b bzw. 36c auf, die zwischen dem Anschluss 34a, 34b bzw. 34c und dem Einlass 27a, 27b bzw. 27c geschaltet ist.

Für den Anschluss der Trenneinheit 18 stromabwärts an den Ablauf 20 ist ein Sammler 40 vorgesehen, der eine Anzahl von Strängen 40a, 40b, 40c aufweist, welche bevorzugt der Anzahl der Stränge 30a, 30b, 30c des Verteilers 30 entspricht. Von jedem Modul 22a, 22b bzw. 22c ist dessen Auslass 28a, 28b bzw. 28c mit dem zugehörigen Strang 40a, 40b bzw. 40c des Sammlers 40 über einen trennbaren Anschluss 42a, 42b bzw. 42c verbunden. Stromabwärts hinter dem Anschluss 42a, 42b bzw. 42c ist in jedem Strang 40a, 40b bzw. 40c des Sammlers 40 ein Absperrventil 44a, 44b bzw. 44c vorgesehen.

Wie die Figur 2 ferner schematisch erkennen lässt, ist jedes Modul 22a, 22b, 22c mit einer Rückflussleitung 46a, 46b bzw. 46c versehen, über die ein Teil des Abwassers aus einem stromabwärts und benachbart zur Membran 26a, 26b bzw. 26c befindlichen Bereich des stromaufwärts gelegenen Abschnittes 24aa, 24ba bzw. 24ca des Behälters 24a, 24b bzw. 24c zu dessen Einlass 27a, 27b bzw. 27c zurückgeführt wird. Dieser zurückgeführte Teil des Abwassers enthält eventuell noch vorhandene restliche Verunreinigungen wie insbesondere Biomasse und/oder sonstige Dickstoffe, welche von der Membran 26a, 26b bzw. 26c zurückgehalten werden. Über diese Rückflussleitung 46a, 46b bzw. 46c werden jene Verunreinigungen wiederholt durch den stromaufwärts gelegenen Abschnitt 24aa, 24ba bzw. 24ca des Gehäuses 24a, 24b bzw. 24c geleitet und dabei aufgrund des Zustromes von weiterem Abwasser aus der Verbindungsleitung 16 und dem Verteiler 30 verdünnt. Wie Figur 2 ferner schematisch erkennen lässt, ist an jede Rückflussleitung 46a, 46b, 46c eine Abflussleitung 48a, 48b bzw. 48c angeschlossen, durch die zumindest ein Teil der zurückgehaltenen Verunreinigungen aus der Rückflussleitung 46a, 46b bzw. 46c abgeleitet und entfernt wird. Der beschriebene Verdünnungseffekt wird somit nicht nur dadurch erwirkt, dass ein Teil des Abwassers über die Rückflussleitungen 46a, 46b, 46c zurückgeleitet und mit neuem Abwasser vermischt wird, sondern zusätzlich sorgt der durch die Rückflussleitung 46a, 46b bzw. 46c gebildete Kreislauf für eine Aufkonzentration der Verunreinigungen, welche dann über die Abflussleitungen 48a, 48b, 48c aus dem Kreislauf entnommen werden. Dabei sorgt die in jedem Modul 22a, 22b, 22c einlassseitig vorgesehene Pumpe 36a, 36b bzw. 36c dafür, dass nicht nur neues Abwasser aus der Verbindungsleitung 16 über den Verteiler 30, sondern ebenfalls auch Abwasser aus der Rückflussleitung 46a, 46b bzw. 26c angesaugt wird. Durch die einlassseitig und auslassseitig vorgesehenen Absperrventile 32a, 32b, 32c und 44a, 44b, 44c und trennbaren Anschlüsse 34a, 34b, 34c und 42a, 42b, 42c lassen sich die Module 22a, 22b, 22c bei Bedarf zu- oder abschalten und auch vollständig entfernen, insbesondere um für einen besonders effizienten Betrieb der gesamten Vorrichtung die Trenneinheit 18 hinsichtlich ihrer betriebsrelevanten Eigenschaften und insbesondere ihrer Kapazität an den jeweiligen Betriebszustand der gesamten Vorrichtung und insbesondere an die Kapazität des verwendeten Reaktors 10 entsprechend anzupassen oder um beispielsweise auch Reinigungs- oder Wartungsarbeiten an einem der Module 22a, 22b, 22c durchführen zu können, ohne dass dadurch der Betrieb der gesamten Vorrichtung beeinträchtigt wird.

Zur Entnahme eines der Module 22a, 22b, 22c, zu welchem ja neben dem die Membran 26a, 26b bzw. 26c enthaltenden Gehäuse 24a, 24b bzw. 24c auch noch die Pumpe 36a, 36b bzw. 36c und die Rückflussleitung 46a, 46b bzw. 46c gehören, müssen die zugehörigen einlass- und auslassseitigen Absperrventile 32a und 44a, 32b und 44b bzw. 32c und 44c geschlossen und anschließend die zugehörigen einlass- und auslassseitigen Anschlüsse 34a und 42a, 34b und 42b bzw. 34c und 42c getrennt werden. Anschließend kann dann das entsprechende Modul 22a, 22b bzw. 22c aus der Trenneinheit 18 entnommen werden. Eine solche Maßnahme eignet sich insbesondere auch bei Bedarf für den Austausch oder Wechsel eines Moduls gegen ein anderes Modul, insbesondere wenn das alte Modul nicht mehr ordnungsgemäß funktioniert oder ein Wechsel auf ein anderes Modul mit anderen betriebsrelevanten Eigenschaften erforderlich wird.

Abschließend sei noch der guten Vollständigkeit angemerkt, dass die Figur nur eine sehr vereinfachte Darstellung der zuvor beschriebenen Anlage wiedergibt. Tatsächlich weist eine solche Anlage gewöhnlich noch weitere Aggregate wie z.B. Pumpen, Abzweige, Schieber, Ventile und weitere Rohrleitungen sowie Steuerungen und Energieversorgungseinrichtungen auf, die gewöhnlich zu dem außerhalb des Abwassertanks befindlichen Teil der Anlage gehören, aber in der Figur aus Gründen der Übersichtlichkeit weggelassen sind. Ebenfalls können anstelle eines Reaktors 10 auch mehrere Reaktoren verwendet werden und können beispielsweise auch die Module 22a, 22b, 22c jeweils mehrere Membranen enthalten.

## Patentansprüche

1. Vorrichtung zur Reinigung von Verunreinigungen enthaltendem Abwasser mit mindestens einem Reaktor (10) zur Vermischung und Anreicherung des Abwassers mit Gas für einen biologischen Abbau der Verunreinigungen und mindestens einer an den Reaktor angeschlossenen Trenneinheit (18) zur Zurückhaltung von im Abwasser eventuell noch vorhandener restlicher Verunreinigungen, wobei die Trenneinheit (18) eine Mehrzahl von parallel geschalteten Modulen (22a, 22b, 22c), von denen jedes Modul (22a; 22b; 22c) eine Filteranordnung enthält, durch die das Abwasser hindurchgeleitet wird, einen stromaufwärts gelegenen Verteiler (30) und einen stromabwärts gelegenen Sammler (40) und jedes Modul (22a, 22b, 22c) einen Einlass (27a; 27b; 27c) und einen Auslass (28a; 28b; 28c) aufweist,
**dadurch gekennzeichnet, dass** der Verteiler (30) und der Sammler (40) mit einer Mehrzahl von verschließbaren Anschlüssen (32a, 34a; 32b, 34b; 32c, 34c; 42a, 44a; 42b, 44b; 42c, 44c) versehen ist und jedes Modul (22a; 22b; 22c) mit seinem Einlass (27a; 27b; 27c) an einen Anschluss (34a; 34b; 34c) des Verteilers (30) und mit seinem Auslass (28a; 28b; 28c) an einen Anschluss (42a; 42b; 42c) des Sammlers (40) lösbar neu angeschlossen ist und einlassseitig eine mit der Filteranordnung in Reihe geschaltete Pumpe (36a; 36b; 36c) enthält.

2. Vorrichtung nach Anspruch 1, **dadurch gekennzeichnet, dass** die Filteranordnung mindestens eine Membran (26a; 26b; 26c) aufweist, durch die das Abwasser hindurchgeleitet wird.

## Claims

1. Device for cleaning waste water containing contaminants, comprising at least one reactor (10) for mixing and enriching the waste water with gas for the biological decomposition of the contaminants, and at least one separating unit (18) connected to the reactor for retaining any contaminants that may still remain in the waste water, wherein the separating unit (18) comprises a plurality of modules (22a; 22b; 22c) connected in parallel, each module (22a; 22b; 22c) of which includes a filter assembly through which the waste water is conducted, an upstream distributor (30) and a downstream collector (40) and each module (22a, 22b, 22c) has an inlet (27a; 27b; 27c) and an outlet (28a; 28b; 28c),
**characterised in that** the distributor (30) and the collector (40) is provided with a plurality of closable connection points (32a, 34a; 32b, 34b; 32c, 34c; 42a, 44a; 42b, 44b; 42c, 44c) and each module (22a; 22b; 22c) with its inlet (27a; 27b; 27c) at a connection point (34a; 34b; 34c) of the distributor (30) and with its outlet (28a; 28b; 28c) at a connection point (42a; 42b; 42c) of the collector (40) is reconnected detachably and on the inlet side contains a pump (36a; 36b; 36c) connected in series with the filter arrangement.

2. Device according to claim 1, **characterised in that** the filter arrangement has at least one membrane (26a; 26b; 26c) through which the waste water is conducted.

## Revendications

1. Dispositif d'épuration des eaux usées contenant des impuretés avec au moins un réacteur (10) pour le mélange et l'enrichissement des eaux usées avec du gaz pour une dégradation biologique des impuretés et au moins une unité de séparation (18) raccordée au réacteur pour la retenue d'impuretés résiduelles éventuellement encore présentes dans les eaux usées,
dans lequel l'unité de séparation (18) présente une pluralité de modules (22a, 22b, 22c) montés en parallèle, dont chaque module (22a ; 22b ; 22c) contient un agencement de filtre, par lequel les eaux usées sont acheminées, un distributeur (30) placé en amont et un collecteur (40) placé en aval et chaque module (22a, 22b, 22c) présente une entrée (27a ; 27b ; 27c) et une sortie (28a ; 28b ; 28c),
**caractérisé en ce que** le distributeur (30) et le collecteur (40) sont pourvus d'une pluralité de raccordements (32a, 34a ; 32b, 34b ; 32c, 34c ; 42a, 44a ; 42b, 44b ; 42c, 44c) refermables et chaque module (22a ; 22b ; 22c) est raccordé à nouveau de manière détachable avec son entrée (27a ; 27b ; 27c) à un raccordement (34a ; 34b ; 34c) du distributeur (30) et avec sa sortie (28a ; 28b ; 28c) à un raccordement (42a ; 42b ; 42c) du collecteur (40) et contient côté entrée une pompe (36a ; 36b ; 36c) montée en série avec l'agencement de filtre.

2. Dispositif selon la revendication 1, **caractérisé en ce que** l'agencement de filtre présente au moins une membrane (26a ; 26b ; 26c), par laquelle les eaux usées sont acheminées.
